(19) Europäisches Patentamt
European Patent Office
Office européen des brevets

(11) EP 4 361 186 A1

(12) EUROPEAN PATENT APPLICATION

(43) Date of publication:
**01.05.2024 Bulletin 2024/18**

(21) Application number: **23204409.9**

(22) Date of filing: **18.10.2023**

(51) International Patent Classification (IPC):
***C08F 10/06*** *(2006.01)* ***C08F 4/654*** *(2006.01)*

(52) Cooperative Patent Classification (CPC):
(C-Sets available)
**C08F 10/06** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022 KR 20220137154**

(71) Applicant: **Hanwha TotalEnergies Petrochemical Co., Ltd.**
**Seosan-si, Chungcheongnam-do (KR)**

(72) Inventors:
- **LEE, Young Joo**
  **Seosan-si, Chungcheongnam-do (KR)**
- **PARK, Sun Jae**
  **Seosan-si, Chungcheongnam-do (KR)**
- **LEE, Seung Cheol**
  **Seosan-si, Chungcheongnam-do (KR)**

(74) Representative: **Brevalex**
**Tour Trinity**
**1 B Place de la Défense**
**92400 Courbevoie (FR)**

# (54) SOLID CATALYST FOR PRODUCING POLYPROPYLENE AND METHOD FOR PREPARATION OF PROPYLENE-DERIVED POLYMER

(57) Disclosed is a method for producing a solid catalyst for propylene polymerization, the method comprising steps of: (1) reacting a dialkoxy magnesium with a metal halide compound in the presence of an organic solvent; (2) reacting the reaction product of step (1) with at least one internal electron donor while increasing the reaction temperature; and (3) reacting the reaction product of step (2) with a titanium halide, wherein the dialkoxy magnesium in step (1) is produced through a reaction step of reacting metal magnesium, an alcohol, and a reaction initiator.

EP 4 361 186 A1

(52) Cooperative Patent Classification (CPC): (Cont.)

C-Sets
**C08F 10/06, C08F 4/6465;**
**C08F 10/06, C08F 4/651;**
**C08F 10/06, C08F 4/6548;**
**C08F 210/06, C08F 4/6492;**
C08F 110/06, C08F 2500/12, C08F 2500/35;
C08F 210/06, C08F 210/08, C08F 210/16,
C08F 2500/27, C08F 2500/34, C08F 2500/35;
C08F 210/06, C08F 210/16, C08F 2500/27,
C08F 2500/34, C08F 2500/35

## Description

## BACKGROUND

1. Technical Field

The present disclosure relates to a solid catalyst for producing polypropylene and a method for preparation of a propylene-derived polymer.

2. Related Art

Polypropylene is a material that is very useful in real life or commercially, and is widely used, especially in household items such as food containers, as well as automobiles and electronic products. For the performance of various products utilizing such polypropylene, it is important to improve the rigidity of polypropylene by ensuring high crystallinity thereof.

Meanwhile, the impact strength required for automotive interior and exterior materials can be satisfied by producing a propylene-based block copolymer having a high rubber content, and to this end, the role of a polymerization catalyst is most urgently required. That is, the catalyst system should be designed to improve the stereoregularity of the resulting polymer and to satisfy high copolymerizability of propylene with an alpha-olefin. In addition, for economic efficiency in polymer production, it is more advantageous for the catalyst to have higher polymerization activity.

Meanwhile, catalyst systems that are used for gas phase polymerization, slurry polymerization and bulk polymerization of propylene are generally composed of a Ziegler-Natta-type catalyst component, alkyl aluminum, and an external electron donor. In particular, such a catalyst component is known as a solid catalyst containing magnesium, titanium, an internal electron donor and a halogen as essential components. In particular, it is known that the internal electron donor has a significant effect on the catalyst activity and stereoregularity depending on the molecular structure thereof.

It is widely known to use a diester of an aromatic dicarboxylic acid as an internal electron donor in order to reduce the production cost by increasing the catalyst activity and improve the physical properties of the resulting polymer such as stereoregularity by improving the catalyst performance (e.g., US Patent No. 4,562,173, US Patent No. 4,981,930, Korean Patent No. 72844, etc.). These patent documents disclose a method of producing a catalyst exhibiting high activity and high polymer stereoregularity using an aromatic dialkyl diester or an aromatic monoalkyl monoester. However, this method is not satisfactory enough to obtain a highly stereoregular polymer in high yield, and needs to be improved.

Meanwhile, Korean Patent No. 491387 discloses a method of producing a catalyst using a non-aromatic diether compound as an internal electron donor, and Korean Patent No. 0572616 discloses a method of producing a catalyst using a non-aromatic compound containing both ketone and ether groups as an internal electron donor. However, both of these methods need to be significantly improved in terms of both activity and stereoregularity.

In addition, US Patent Application No. 2011/0040051 proposes a method of producing a catalyst using a mixture of diethyl-2,3-diisopropyl-2-cyanosuccinate and 9,9-bismethoxyfluorene as an internal electron donor, but needs to be improved because both the catalyst activity and the polymer stereoregularity are insufficient.

## SUMMARY

An embodiment of the present disclosure is intended to provide a method for producing a solid catalyst for producing polypropylene, in which the solid catalyst makes it possible to produce a polypropylene having high stereoregularity and excellent melt flowability in high yield, also makes it possible to produce a copolymer having a high comonomer content by the copolymerization of propylene with an alpha-olefin, and may also dramatically reduce the agglomeration of polymer particles during copolymer production, and a method for preparation of a propylene-derived polymer.

An embodiment of the present disclosure provides a method for producing a solid catalyst for propylene polymerization and a solid catalyst for propylene polymerization produced thereby, the method including steps of:

(1) reacting dialkoxy magnesium with a metal halide compound in the presence of an organic solvent;
(2) reacting the reaction product of step (1) with at least one internal electron donor while increasing the reaction temperature; and
(3) reacting the reaction product of step (2) with a titanium halide,

wherein the dialkoxy magnesium in step (1) is produced through a reaction step of reacting metal magnesium, an alcohol, and a reaction initiator, wherein the metal magnesium is introduced in n divided portions (where n is an

integer greater than 2 and represents the total number of the divided portions), and the amount of the metal magnesium introduced is controlled to satisfy the following Equation 1:

[Equation 1]

$$0.1 \leq N/W\ (\alpha) \leq 1.2$$

wherein N is a positive integer and represents the sum of the amounts of the metallic magnesium introduced from the beginning to $(n-1)^{th}$, and W is a positive integer and represents the amount (number of moles) of the metal magnesium introduced at $n^{th}$ which is the last introduction stage.

Another embodiment of the present disclosure provides a method for producing a propylene-based polymer, the method including polymerizing propylene to produce a propylene polymer or copolymerizing or terpolymerizing propylene with other alpha-olefin(s) to produce a propylene copolymer or terpolymer, in the presence of the produced solid catalyst for propylene polymerization, an alkyl aluminum compound as a cocatalyst, and an external electron donor composed of at least one alkoxysilane-based compound.

Through the method for producing a solid catalyst for producing polypropylene and method for preparation of propylene-derived polymer according to one embodiment of the present disclosure, it is possible to produce a polypropylene having high stereoregularity and excellent melt flowability in high yield, and to dramatically reduce the agglomeration of polymer particles during copolymer production, and also to produce a copolymer having a high comonomer content.

## BRIEF DESCRIPTION OF THE DRAWINGS

FIG. 1 is a photograph of a propylene-ethylene-1-butene terpolymer according to a Comparative Example.
FIG. 2 is a photograph of a propylene-ethylene-1-butene terpolymer according to Example 1.

## DETAILED DESCRIPTION

Hereinafter, some embodiments of the present disclosure will be described in detail with reference to exemplary drawings. In adding reference numerals to components of each drawing, the same components may have the same numerals as much as possible, even if they are displayed on different drawings. In the following description and the accompanying drawings, the same elements will be denoted by the same reference numerals if possible, although they are shown in different drawings. Further, in the description of the embodiments, the detailed description of related known configurations or functions will be omitted when it may obscure the subject matter of the present disclosure. Where "include," "have," and "comprise" are used in the specification, one or more additional parts may be included unless "only" is used. Singular expressions include plural expressions unless specified otherwise in the context thereof.

In addition, terms, such as first, second, A, B, (a), (b) or the like may be used herein when describing components of the present disclosure. Each of these terms is not used to define an essence, order or sequence of a corresponding component but is used merely to distinguish the corresponding component from other components.

It should be understood that when it is described in the specification that two or more components are "connected," "coupled" or "joined" to each other, other component may be "connected," "coupled," and "joined" between the two or more components, although the two or more components may be directly connected, coupled or joined to each other. Here, the other component may be included in at least one of two or more components that are "connected", "coupled" or "joined" to each other.

When time relative terms, such as "after ...," "subsequent to ...," "next to ...," "before ...," and the like, are used to describe components, or flows or steps in operating or manufacturing methods, these terms may also be used to describe non-consecutive processes or operations unless the term "directly" or "immediately" is used.

Meanwhile, it should be considered that when numerical values for components, or corresponding information (e.g., level, etc.) are mentioned, the numerical values or corresponding information include a tolerance or error range that may be caused by various factors (e.g., process factors, internal or external impact, noise, etc.), even if there is no separate explicit description.

In the present specification, the propylene-based polymer may include polypropylene, a propylene copolymer, or a combination thereof.

An embodiment of the present disclosure provides a method of producing polypropylene using a solid catalyst for propylene polymerization, the solid catalyst including: a solid catalyst, prepared by the method for producing a solid catalyst for propylene polymerization, as a main catalyst component; an alkyl aluminum compound as a cocatalyst component; and an external electron donor including one dialkoxy silane-based compound and two different trialkoxy silane-based compounds. Here, the solid catalyst may be a Ziegler-based catalyst.

The method for producing a solid catalyst for producing polypropylene may include steps of:

(1) reacting dialkoxy magnesium with a metal halide compound in the presence of an organic solvent;
(2) reacting the reaction product of step (1) with at least one internal electron donor while increasing the reaction temperature; and
(3) reacting the reaction product of step (2) with a titanium halide.

Here, step (1) is performed at a lower temperature than that in step (3), and step (3) is performed at a higher temperature than that in step (1).

In the above-described method for producing a solid catalyst, diethoxy magnesium used in step (1) is produced by reacting metal magnesium, an alcohol, and a reaction initiator. At this time, the metal magnesium and the alcohol may be added in two or more added portions in amounts such that the molar ratio of the total number of moles of the metal magnesium to the total number of moles of the alcohol is 1:4 to 1:20. The reaction initiator may be introduced into the reaction system at the beginning of the reaction, and then added one or more times as needed during the reaction.

In the above-described method for producing a solid catalyst, the shape of the metal magnesium particles used is not particularly limited, but is preferably in the form of powder having an average particle diameter of 10 to 500 μm, more preferably 50 to 300 um. If the average particle diameter of the metal magnesium is less than 10 μm, the average particle size of the carrier, which is the product, becomes excessively fine, and if the average particle diameter of the metal magnesium is more than 500 μm, the average particle size of the carrier becomes excessively large, and it is difficult for the carrier to have a uniform spherical shape, and thus the resulting catalyst is difficult to have a uniform particle shape.

As the alcohol, it is preferable to use one or a mixture of two or more selected from among aliphatic alcohols represented by the formula ROH (where R is an alkyl group having 1 to 6 carbon atoms), for example, methanol, ethanol, normal propanol, isopropanol, n-butanol, isobutanol, n-pentanol, isopentanol, neo-pentanol, cyclopentanol, and cyclohexanol, or aromatic alcohols such as phenol. More preferably, one or a mixture of two or more selected from among methanol, ethanol, propanol and butanol is used. Most preferably, ethanol is used.

Meanwhile, the metal magnesium and the alcohol are preferably used in each step at a ratio of 1:4 to 1:50 as the ratio of the number of moles of the metal magnesium: the number of moles of the alcohol, more preferably 1:10 to 1:40. If the metal magnesium and the alcohol are used at a ratio of less than 1:4, a problem may arise in that the viscosity of the slurry increases rapidly, making uniform stirring difficult, and a large amount of fine particles is generated, and if the metal magnesium and the alcohol are used at a ratio of more than 1:50, a problem may arises in that the particles of the resulting carrier have a rough surface or particle formation is not achieved.

A nitrogen halide compound may be used as the reaction initiator in the reaction between the metal magnesium and the alcohol.

The nitrogen halide compound that may be used as the reaction initiator is not particularly limited, but at least one compound selected from the group consisting of compounds represented by Formulas 1 to 4 below may be used.

[Formula 1]

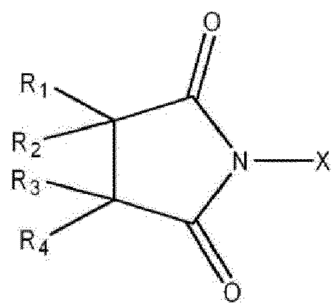

The compound represented by Formula 1 is an N-halide succinimide-based compound wherein X is a halogen, and $R_1$, $R_2$, $R_3$ and $R_4$ are each independently hydrogen, $C_1$-$C_{12}$ alkyl, or $C_6$-$C_{20}$ aryl.

[Formula 2]

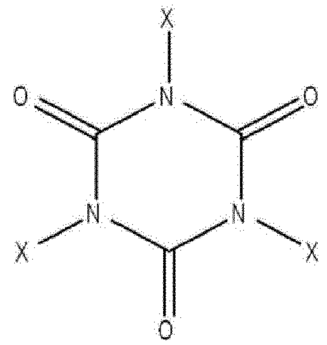

The compound represented by Formula 2 is a trihaloisocyanuric acid-based compound wherein each X is independently a halogen.

[Formula 3]

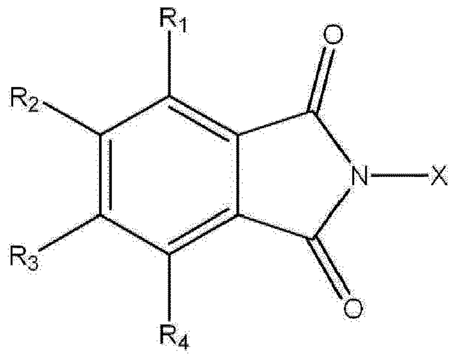

The compound represented by Formula 3 is an N-halophthalimide-based compound wherein X is a halogen, and $R_1$, $R_2$, $R_3$ and $R_4$ are each independently hydrogen, $C_1$-$C_{12}$ alkyl, or $C_6$-$C_{20}$ aryl.

[Formula 4]

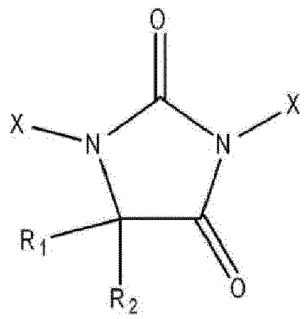

The compound represented by Formula 4 is a hydantoin-based compound wherein each X is independently a halogen, and $R_1$ and $R_2$ are each independently hydrogen, $C_1$-$C_{12}$ alkyl, or $C_6$-$C_{20}$ aryl.

Meanwhile, a halogen compound or a magnesium halide compound may be used as the reaction initiator. In a specific example, the halogen compound may be a compound such as $Br_2$ or $I_2$, and the magnesium halide compound may be $MgCl_2$, $MgBr_2$, $MgI_2$ or the like.

The reaction initiator is preferably used in an amount of 0.05 to 0.5 mol based on 1 part by weight of the total weight of the magnesium metal used. If the reaction initiator is used in an amount of less than 0.05 mol, the reaction rate may be excessively low, and if the reaction initiator is used in an amount of more than 0.5 mol, the particle size of the product becomes excessively large or a large amount of fine particles may be generated.

In step (1) of the method for producing a solid catalyst for producing polypropylene according to an embodiment of the present disclosure, in the reaction between the metal magnesium and the alcohol, the metal magnesium and the alcohol may be added in 3 to 7 divided portions, and the reaction initiator is preferably added at the beginning of the reaction, and then added in 2 to 7 divided portions as necessary during the reaction. When the number of the divided portions of the metal magnesium and the alcohol and the number of times the reaction initiator is added are two or less, there are limitations in controlling the particle size, and there are disadvantages in that it is difficult to form spherical particles and the generation of fine particles increases.

Meanwhile, assuming that the total number of the divided portions of the metal magnesium is n, the sum of the amounts of the metallic magnesium introduced from the beginning to $(n-1)^{th}$ is expressed as N, and the amount (number of moles) of the metal magnesium introduced at $n^{th}$ which is the last introduction stage is expressed as W, the amount of the metal magnesium introduced is preferably controlled to satisfy the following Equation 1:

[Equation 1]

$$0.1 \leq N/W\ (\alpha) \leq 1.2$$

If the amount of the metal magnesium introduced is out of the range defined by Equation 1 above, it may be difficult to control the particles, and the generation of fine particles of the polymer during polymerization using the catalyst may increase, making the polymerization process unstable and causing process troubles.

In addition, the stirring speed during the reaction is preferably 50 to 300 rpm, more preferably 70 to 250 rpm. If the stirring speed is excessively low or excessively high, there is a disadvantage in that the particles are not uniform. In addition, the reaction between the metal magnesium and the alcohol is preferably performed at a temperature of 25 to 110°C, more preferably 50 to 100°C, in the presence of the reaction initiator. Thereafter, aging treatment is preferably performed at a temperature of 60 to 110°C. The reaction may also be performed while cooling under reflux at the boiling point temperature of the alcohol. If the reaction temperature and the aging treatment temperature are out of the above ranges, the reaction rate may be very low at 50°C or lower, and the reaction may occur very rapidly at a temperature higher than 110°C, resulting in the formation of fine particles and aggregation between particles, which are undesirable.

Meanwhile, the bulk specific gravity of the dialkoxy magnesium produced in step (1) is preferably 0.20 to 0.40 g/ml, more preferably 0.20 to 0.30 g/ml. If this bulk specific gravity is less than 0.20 g/ml, particle formation may be difficult or the fine powder content may increase, making it impossible to obtain highly stereoregular polyolefin in high yield. On the other hand, if the bulk specific gravity is more than 0.40 g/ml, it may undesirably affect the particle properties of the resulting polyolefin. The pore volume of the dialkoxy magnesium is preferably 0.01 to 0.2 ml/g, more preferably 0.06 to 0.1 ml/g. When a solid catalyst component produced using this porous dialkoxy magnesium having a relatively small pore volume within a specific range is used for polymerization of olefins, a polymer having high stereoregularity and excellent particle properties may be obtained in high yield. Furthermore, in this case, a copolymer having excellent particle properties and a low proportion of a rubber phase polymer while having a high comonomer content may be obtained in high yield.

There is no particular limitation on the type of organic solvent used in step (1), and examples of the organic solvent include $C_6$-$C_{12}$ aliphatic hydrocarbons, aromatic hydrocarbons, halogenated hydrocarbons, etc., more preferably $C_7$-$C_{10}$ saturated aliphatic hydrocarbons, aromatic hydrocarbons, and halogenated hydrocarbons. In a specific example, the organic solvent may be one or a mixture of two or more selected from among heptane, octane, nonane, decane, toluene, xylene, chlorohexane, and chloroheptane.

The dialkoxy magnesium and the organic solvent are preferably used at a ratio of 1:5 to 1:50 as dialkoxy magnesium weight: organic solvent volume, more preferably 1:7 to 1:20. If the dialkoxy magnesium and the organic solvent are used at a ratio of less than 1:5, the viscosity of the slurry may increase rapidly, making uniform stirring difficult, and if they are used at a ratio of more than 1:50, a problem may arise in that the apparent density of the resulting carrier rapidly decreases or the surface of the particles becomes rough, which is undesirable.

The titanium halide used in the above-described method for producing a solid catalyst may be represented by the following Formula 5.

[Formula 5]

$$Ti(OR)_nX_{(4-n)}$$

wherein R is an alkyl group having 1 to 10 carbon atoms, X represents a halogen element, and n is for adjusting the

valence in the formula and is an integer ranging from 0 to 3.

Examples of the titanium halide include $TiCl_4$, $Ti(OCH_3)Cl_3$, $Ti(OC_2H_5)Cl_3$, $Ti(OC_3H_7)Cl_3$, $Ti(O(n\text{-}C_4H_9))Cl_3$, $Ti(OCH_3)_2Cl_2$, $Ti(OC_2H_5)_2C_{12}$, $Ti(OC_3H_7)_2C_{12}$, $Ti(O(n\text{-}C_4H_9))_2C_{12}$, $Ti(OCH_3)_3Cl$, $Ti(OC_2H_5)_3Cl$, $Ti(OC_3H_7)_3Cl$, $Ti(O(n\text{-}C_4H_9)_3Cl$, and the like. Thereamong, $TiCl_4$ is preferably used. In addition, these tetravalent titanium halide compounds may be used alone or in combination of two or more. The reaction temperature in step (1) is -10 to 60°C.

The at least one internal electron donor that is used in step (2) is preferably a diester, particularly, an aromatic diester, more particularly, phthalic acid diester. A suitable example of the phthalic acid diester may be one or a mixture of two or more selected from among compounds represented by the following Formula 6, for example, dimethyl phthalate, diethyl phthalate, di-n-propyl phthalate, diisopropyl phthalate, di-n-butyl phthalate, diisobutyl phthalate, di-n-pentyl phthalate, di(2-methylbutyl)phthalate, di(3-methylbutyl)phthalate, di-neo-pentyl phthalate, di-n-hexyl phthalate, di(2-methylpentyl)phthalate, di(3-methylpentyl)phthalate, di-iso-hexyl phthalate, di-neo-hexyl phthalate, di(2,3-dimethylbutyl)phthalate, di-n-heptyl phthalate, di(2-methylhexyl)phthalate, di(2-ethylpentyl)phthalate, di-iso-heptyl phthalate, di-neo-heptyl phthalate, di-n-octyl phthalate, di(2-methylheptyl)phthalate, diisooctyl phthalate, di(3-ethylhexyl)phthalate, di-neo-hexyl phthalate, di-n-heptyl phthalate, diisoheptyl phthalate, di-neo-heptyl phthalate, di-n-octyl phthalate, diisooctyl phthalate, di-neo-octyl phthalate, di-n-nonyl phthalate, diisononyl phthalate, di-n-decyl phthalate, or diisodecyl phthalate.

[Formula 6]

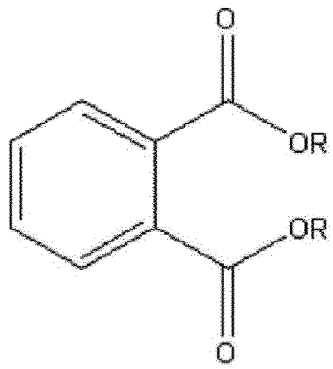

wherein each R is independently an alkyl group having 1 to 10 carbon atoms.

Meanwhile, as the internal electron donor, a 1,3-diether compound is also very preferably used, and a compound having a structure represented by the following Formula 7 is very preferable.

[Formula 7] $R^6R^7C(CH_2OR^8)(CH_2OR^9)$

The compound represented by Formula 7 is a 1,3-diether compound wherein $R^6$ and $R^7$, which are the same as or different from each other, are each independently a $C_1$-$C_{18}$ alkyl, $C_3$-$C_{18}$ cycloalkyl or $C_7$-$C_{18}$ aryl radical, and $R^8$ and $R^9$, which are the same as or different from each other, are a $C_1$-$C_4$ alkyl radical; or the carbon atom at position 2 belongs to a cyclic or polycyclic ring containing 2 or 3 unsaturated bonds and having 5, 6 or 7 carbon atoms.

Specific examples of the 1,3-diether compound as the internal electron donor include 2-(2-ethylhexyl)-1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-t-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(p-fluorophenyl)-1,3-dimethoxypropane, 2-(1-decahydronaphthyl)-1,3-dimethoxypropane, 2-(p-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane,2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropyl, 2,2-diisobutyl-1,3-diethoxypropane, 2,2-diisobutyl-1,3-dibutoxy propane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 9,9-bis(methoxymethyl)fluorene, 9,9-bis(methoxymethyl)-2,3,6,7-tetramethylfluorene, 9,9-bis(methoxymethyl)-2,3,4,5,6,7-hexafluorofluorene, 9,9-bis(methoxymethyl)-2,3-benzofluorene, 9,9-bis(methoxymethyl)-2,3,6,7-dibenzofluorene, 9,9-bis(methoxymethyl)-2,7-diisopropylfluorene, 9,9-bis(methoxymethyl)-1,8-dichlorofluorene, 9,9-bis(methoxymethyl)-2,7-dicyclopentylfluorene, 9,9-bis(methoxymethyl)-1,8-difluorofluorene, 9,9-bis(methoxymethyl)-1,2,3,4-tetrahydrofluorene, 9,9-bis(methoxymethyl)-1,2, 3,4,5,6,7,8-octahydrofluorene, and 9,9-bis(methoxymethyl)-4-t-butylfluorene.

In addition, cyclic ester compounds having structures represented by the following Formulas 8 to 11 are highly preferred:

[Formula 8]

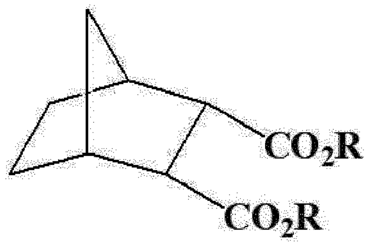

[Formula 9]

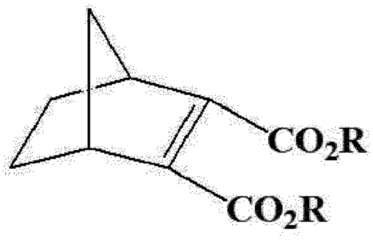

[Formula 10]

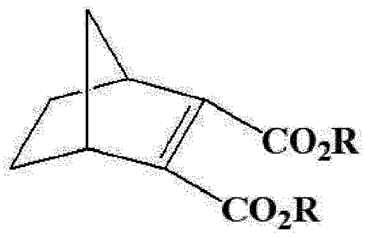

[Formula 11]

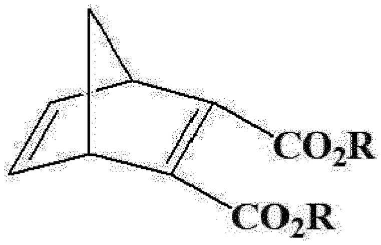

wherein each R is independently a linear, branched or cyclic alkyl group having 1 to 10 carbon atoms.

Examples of the internal electron donor include bicyclo[2.2.1]heptane-2,3-dicarboxylic acid diisobutyl ester, bicyclo[2.2.1]heptane-2,3-dicarboxylic acid dibutyl ester, bicyclo[2.2.1]heptane-2,3-dicarboxylic acid diisopropyl ester, bicyclo[2.2.1]heptane-2,3-dicarboxylic acid dipropyl ester, bicyclo[2.2.1]heptane-2,3-dicarboxylic acid diethyl ester, bicyclo[2.2.1]heptane-2,3-dicarboxylic acid dimethyl ester, bicyclo[2.2.1]hept-5-ene-2,3-dicarboxylic acid diisobutyl ester, bicyclo[2.2.1]hept-5-ene-2,3-dicarboxylic acid dibutyl ester, bicyclo[2.2.1]hept-5-ene-2,3-dicarboxylic acid diisopropyl ester, bicyclo[2.2.1]hept-5-ene-2,3-dicarboxylic acid diisopropyl ester, bicyclo[2.2.1]hept-5-ene-2,3-dicarboxylic acid diethyl ester, bicyclo[2.2.1]hept-5-ene-2,3-dicarboxylic acid dimethyl ester, bicyclo[2.2.1]hept-2-ene-2,3-dicarboxylic acid diisobutyl ester, bicyclo[2.2.1]hept-2-ene-2,3-dicarboxylic acid dibutyl ester, bicyclo[2.2.1]hept-2-ene-2,3-dicarboxylic acid diisopropyl ester, bicyclo[2.2.1]hept-2-ene-2,3-dicarboxylic acid dipropyl ester, bicyclo[2.2.1]hept-2-ene-2,3-dicarboxylic acid diethyl ester, bicyclo[2.2.1]hept-2-ene-2,3-dicarboxylic acid dimethyl ester, bicyclo[2.2.1]hept-2,5-diene-2,3-dicarboxylic acid diisobutyl ester, bicyclo[2.2.1]hept-2,5-diene-2,3-dicarboxylic acid dibutyl ester, bicyclo[2.2.1]hept-2,5-diene-2,3-dicarboxylic acid diisopropyl ester, bicyclo[2.2.1]hept-2,5-diene-2,3-dicarboxylic acid dipropyl ester, bicyclo[2.2.1]hept-2,5-diene-2,3-dicarboxylic acid diethyl ester, bicyclo[2.2.1]hept-2,5-diene-2,3-dicarboxylic acid dimethyl ester, and the like, and thereamong, one or a mixture of two or more may be used. In addition, as other examples of the internal electron donor, cyclic alkyl diesters may also be used.

Specific examples of the internal electron donor may be compounds represented by Formulas 12 to 19 below.

In Formulas 12 to 19 below, R1 and R2 are the same as or different from each other and are each independently a linear, branched or cyclic alkyl group, alkenyl group, aryl group, arylalkyl group or alkylaryl group having 1 to 20 carbon atoms, and R3 to R12 are the same as or different from each other and are each independently hydrogen or a linear, branched or cyclic alkyl group, alkenyl group, aryl group, arylalkyl group or alkylaryl group having 1 to 20 carbon atoms.

[Formula 12]

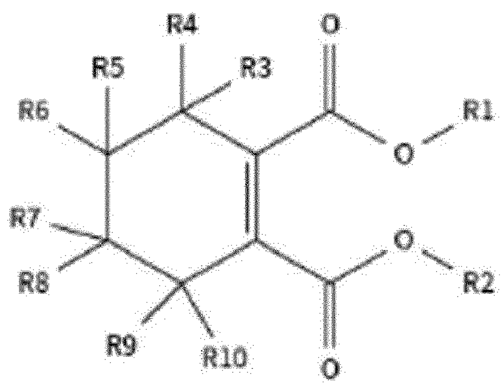

Specific examples of the compound represented by Formula 12 include dimethyl cyclohex-1-ene-1,2-dicarboxylate, diethyl cyclohex-1-ene-1,2-dicarboxylate, 1-ethyl 2-methylcyclohex-1-ene-1,2-dicarboxylate, 1-ethyl 2-propyl cyclohex-1-ene-1,2-dicarboxylate, dipropyl cyclohex-1-ene-1,2-dicarboxylate, diisopropyl cyclohex-1-ene-1,2-dicarboxylate, diethyl 3-methylcyclohex-1-ene-1,2-dicarboxylate, diethyl 3,3-dimethylcyclohex-1-ene-1,2-dicarboxylate, diethyl 3,3,4,4-tetramethylcyclohex-1-ene-1,2-dicarboxylate, diethyl 3,3,4,4,6-pentamethylcyclohex-1-ene-1,2-dicarboxylate, dibutyl 4,5-dimethylcyclohex-1-ene-1,2-dicarboxylate, 2-ethyl-1-propyl 5-ethyl-3,3,4-trimethylcyclohex-1-ene-1,2-dicarboxylate, and the like.

[Formula 13]

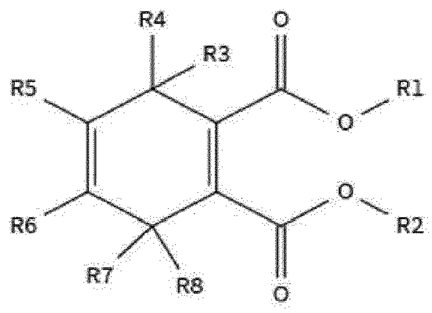

Specific examples of the compound represented by Formula 13 include dimethylcyclohexa-1,4-diene-1,2-dicarboxylate, diethylcyclohexa-1,4-diene-1,2-dicarboxylate, dipropylcyclohexa-1,4-diene-1,2-dicarboxylate, diisopropylcyclohexa-1,4-diene-1,2-dicarboxylate, diethyl 3-methylcyclohexa-1,4-diene-1,2-dicarboxylate, diethyl 3,3-dimethylcyclohexa-1,4-diene-1,2-dicarboxylate, diethyl 3,3,6-trimethylcyclohexa-1,4-diene-1,2-dicarboxylate, diethyl 3,3,6,6-tetramethylcyclohexa-1,4-diene-1,2-dicarboxylate, diethyl 3,3,4,5,6,6-hexamethylcyclohexa-1,4-diene-1,2-dicarboxylate, 1-ethyl-2-propyl4-ethyl-3,5,6-trimethylcyclohexa-1,4-diene-1,2-dicarboxylate, 2-ethyl-1-propyl 5-ethyl-3,3,4,6-tetramethylcyclohexa-1,4-diene-1,2 dicarboxylate, and the like.

[Formula 14]

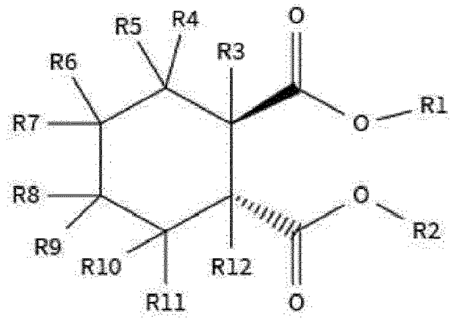

Specific examples of the compound represented by Formula 14 include trans-dimethyl-cyclohexane-1,2-dicarboxylate, trans-1-ethyl-2-methyl cyclohexane-1,2-dicarboxylate, trans-diethylcyclohexane-1,2-dicarboxylate, trans-1-ethyl 2-propylcyclohexane-1,2-dicarboxylate, trans-2-ethyl 1-propyl 1-methylcyclohexane-1,2-dicarboxylate, trans-1-ethyl 2-propyl 1,2-dimethylcyclohexane-1,2-dicarboxylate, trans-1-ethyl 2-propyl-1,2,4,4-tetramethylcyclohexane-1,2-dicarboxylate, trans-1-ethyl 2-propyl-1,2,4,4,5,5-hexamethylcyclohexane-1,2-dicarboxylate, trans-1-butyl 2-ethyl-1,4,5,5-tetramethylcyclohexane-1,2-dicarboxylate, and the like.

[Formula 15]

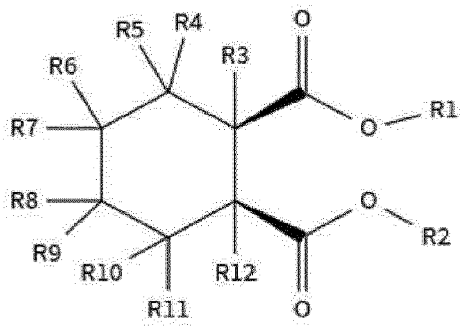

Specific examples of the compound represented by Formula 15 include cis-dimethyl-cyclohexane-1,2-dicarboxylate, cis-1-ethyl 2-methylcyclohexane-1,2-dicarboxylate, cis-diethylcyclohexane-1,2-dicarboxylate, cis-1-ethyl 2-propylcyclohexane-1,2-dicarboxylate, cis-2-ethyl 1-propyl 1-methylcyclohexane-1,2-dicarboxylate, cis-1-ethyl 2-propyl 1,2-dimethylcyclohexane-1,2-dicarboxylate, cis-1-ethyl 2-propyl-1,2,4,4-tetramethylcyclohexane-1,2-dicarboxylate, cis-1-ethyl 2-propyl-1,2,4,4,5,5-hexamethylcyclohexane-1,2-dicarboxylate, cis-1-butyl2-ethyl-1,4,5,5-tetramethylcyclohexane-1,2-dicarboxylate, and the like.

[Formula 16]

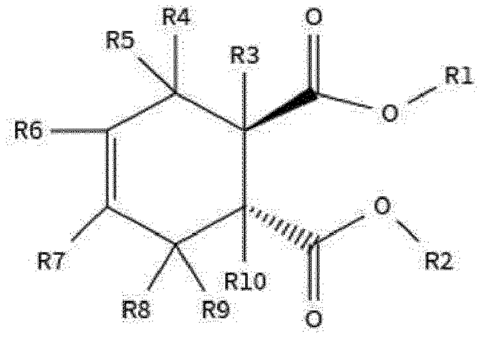

Specific examples of the compound represented by Formula 16 include trans-dimethyl cyclohex-4-ene-1,2-dicarboxylate, trans-diethylcyclohex-4-ene-1,2-dicarboxylate, trans-dipropylcyclohex-4-ene-1,2-dicarboxylate, trans-diisopropylcyclohex-4-ene-1,2-dicarboxylate, trans-dibutylcyclohex-4-ene-1,2-dicarboxylate, trans-1-ethyl-2-methylcyclohex-4-ene-1,2-dicarboxylate, trans-1-ethyl-2-propylcyclohex-4-ene-1,2-dicarboxylate, trans-1-ethyl-2-propyl-3-methylcyclohex-4-ene-1,2-dicarboxylate, trans-1-ethyl-2-propyl-3,6-dimethylcyclohex-4-ene-1,2-dicarboxylate, trans-2-ethyl-1-propyl-3,4,6-trimethylcyclohex-4-ene-1,2-dicarboxylate, trans-2-ethyl-1-propyl-4-ethyl-3,6-dimethylcyclohex-4-ene-1,2-dicarboxylate, and the like.

[Formula 17]

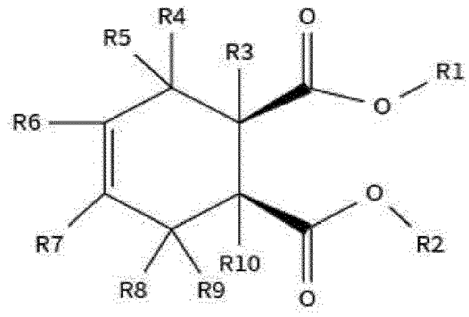

Specific examples of the compound represented by Formula 17 include cis-dimethyl cyclohex-4-ene-1,2-dicarboxylate, cis-diethylcyclohex-4-ene-1,2dicarboxylate, cis-dipropylcyclohex-4-ene-1,2-dicarboxylate, cis-diisopropylcyclohex-4-ene-1,2-dicarboxylate, cis-dibutylcyclohex-4-ene-1,2-dicarboxylate, cis-1-ethyl-2-methylcyclohex-4-ene-1,2-dicarboxylate, cis-1-ethyl-2-propylcyclohex-4-ene-1,2-dicarboxylate, cis-1-ethyl-2-propyl-3-methylcyclohex-4-ene-1,2-dicarboxylate, cis-1-ethyl-2-propyl-3,6-dimethylcyclohex-4-ene-1,2-dicarboxylate, cis-2-ethyl-1-propyl-3,4,6-trimethylcyclohex-4-ene-1,2-dicarboxylate, cis-2-ethyl-1-propyl-4-ethyl3,6-dimethylcyclohex-4-ene-1,2-dicarboxylate, and the like.

[Formula 18]

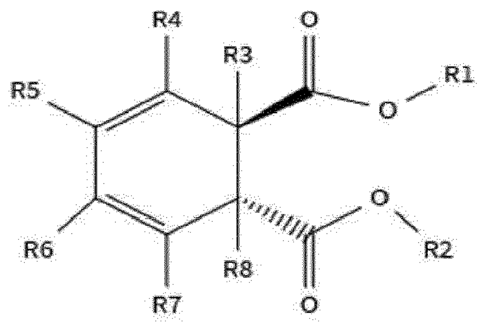

Specific examples of the compound represented by Formula 18 include trans-dimethylcyclohexa-3,5-diene-1,2-dicarboxylate, trans-diethylcyclohexa-3,5-diene-1,2-dicarboxylate, trans-dipropylcyclohexa-3,5-diene-1,2-dicarboxylate, trans-dibutylcyclohexa-3,5-diene-1,2-dicarboxylate, trans-dimethyl-1-methylcyclohexa-3,5-diene-1,2-dicarboxylate, trans-dimethyl-1,2-dimethylcyclohexa-3,5-diene-1,2-dicarboxylate, trans-1-ethyl-2-propyl-1,2-dimethylcyclohexa-3,5-diene-1,2-dicarboxylate, trans-diethyl-4-methylcyclohexa-3,5-diene-1,2-dicarboxylate, trans-diethyl-4,5-dimethylcyclohexa-3,5-diene-1,2-dicarboxylate, trans-diethyl-4-ethyl-3,5,6-trimethylcyclohexa-3,5-diene-1,2-dicarboxylate, and the like.

[Formula 19]

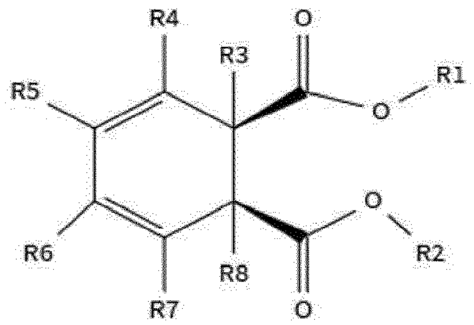

Specific examples of the compound represented by Formula 19 include cis-dimethylcyclohexa-3,5-diene-1,2-dicarboxylate, cis-diethylcyclohexa-3,5-diene-1,2-dicarboxylate, cis-dipropylcyclohexa-3,5-diene-1,2-dicarboxylate, cis-dibutylcyclohexa-3,5-diene-1,2-dicarboxylate, cis-dimethyl-1-methylcyclohexa-3,5-diene-1,2-dicarboxylate, cis-dimethyl-1,2-dimethylcyclohexa-3,5-diene-1,2-dicarboxylate, cis-1-ethyl-2-propyl-1,2-dimethylcyclohexa-3,5-diene-1,2-dicarboxylate, cis-diethyl-4-methylcyclohexa-3,5-diene-1,2-dicarboxylate, cis-diethyl-4,5-dimethylcyclohexa-3,5-diene-1,2-dicarboxylate, cis-diethyl-4-ethyl-3,5,6-trimethylcyclohexa-3,5-diene-1,2-dicarboxylate, and the like.

Step (2) is preferably performed by adding the internal electron donor while generally increasing the temperature of the reaction product of step (1) to 60 to 150°C, preferably 80 to 130°C, and allowing the mixture to react for 1 to 3 hours. If the temperature is lower than 60°C or the reaction time is shorter than 1 hour, the reaction may be difficult to complete, and if the temperature is higher than 150°C or the reaction time is longer than 3 hours, side reactions may occur, resulting in a decrease in the polymerization activity of the resulting catalyst or in the stereoregularity of the resulting polymer.

As long as the internal electron donor is added during the temperature increase process, the temperature at which the internal electron donor is added and the number of times the internal electron donor is added are not particularly limited, and two or more different internal electron donors may be added simultaneously or at different temperatures. There is no limit on the total amount of two internal electron donors used, but the total number of moles of the two internal electron donors used is preferably 0.001 to 2.0 mol per mol of the dialkoxy magnesium used. If the total number of moles of the two internal electron donors used is out of the above range, the polymerization activity of the resulting catalyst or the stereoregularity of the resulting polymer may be lowered, which is undesirable.

Step (3) of the method for producing a solid catalyst is a process of reacting the product of step (2) with a titanium halide in at least two steps at a temperature of 60 to 150°C, preferably 80 to 130°C. Examples of the titanium halide used in step (3) include the titanium halide represented by Formula 5 above.

In the method for producing a solid catalyst, the reaction in each step is preferably performed under a nitrogen gas atmosphere in a reactor equipped with a stirrer, from which moisture and the like have been sufficiently removed.

The solid catalyst of one embodiment of the present disclosure, produced by the above method, includes magnesium, titanium, a halogen compound and an internal electron donor. Considering the aspect of catalyst activity, the solid catalyst preferably includes 5 to 40 wt% of magnesium, 0.5 to 10 wt% of titanium, 50 to 85 wt% of a halogen, and 0.01 to 20 wt% of the internal electron donor.

It can be confirmed through Table 2 below that, through the method for producing a solid catalyst for propylene polymerization according to one embodiment of the present disclosure as described above, it is possible to obtain a propylene-based copolymer having a narrow molecular weight distribution using a catalyst having a high apparent density and activity while having high hydrogen reactivity compared to conventional catalysts.

The solid catalyst produced by the method for producing a solid catalyst according to one embodiment of the present disclosure may be suitably used for polypropylene polymerization or for the production of a propylene copolymer.

A method of producing a propylene-based polymer using the solid catalyst produced according to one embodiment of the present disclosure may include polymerizing propylene to produce a propylene polymer or copolymerizing

or terpolymerizing propylene with other alpha-olefin(s) to produce a propylene copolymer or terpolymer, in the presence of the solid catalyst, a cocatalyst, and an external electron donor.

In one embodiment of the present disclosure, the alpha olefin that is used for copolymerization may be at least one olefin selected from among alpha olefins, each having 2 to 20 carbon atoms (excluding polypropylene having 3 carbon atoms), specifically ethylene, 1-butene, 1-pentene, 4-methyl-1-pentene, vinylcyclohexane, etc., and these alpha olefins may be used alone or in combination. Thereamong, ethylene and 1-butene are preferred, and ethylene is particularly preferred.

The solid catalyst may be pre-polymerized with ethylene or an alpha-olefin before being used in a polymerization reaction.

The pre-polymerization reaction may be performed at sufficiently low temperature under ethylene or alpha-olefin pressure conditions in the presence of a hydrocarbon solvent (e.g., hexane), a catalyst component, and an organoaluminum compound (e.g., triethylaluminum). Pre-polymerization helps to improve the shape of the polymer after polymerization by surrounding the catalyst particles with the polymer to maintain the catalyst shape. The weight ratio of the polymer to the catalyst after pre-polymerization is preferably about 0.1:1 to 20:1.

An organometallic compound of Group II or Group III of the periodic table may be used as a cocatalyst component in the method of producing a propylene-based polymer by propylene polymerization or propylene copolymerization. For example, an alkyl aluminum compound is used. The alkyl aluminum compound is represented by the following Formula 20:

**[Formula 20]** $AlR_3$

wherein each R is independently an alkyl group having 1 to 6 carbon atoms.

Specific examples of the alkyl aluminum compound include trimethyl aluminum, triethyl aluminum, tripropyl aluminum, tributyl aluminum, triisobutyl aluminum, trioctyl aluminum, and the like.

Although the ratio of the cocatalyst component to the solid catalyst component varies somewhat depending on the polymerization method, the molar ratio of metal atoms in the cocatalyst component to titanium atoms in the solid catalyst component is preferably in the range of 1 to 1,000, more preferably 10 to 300. If the molar ratio of metal atoms (e.g., aluminum atoms) in the cocatalyst component to titanium atoms in the solid catalyst component is out of the range of 1 to 1,000, a problem may arise in that the polymerization activity of the catalyst system is greatly reduced.

In the method for producing a propylene-based polymer, at least one of the alkoxysilane compounds represented by the following Formula 21 may be used as the external electron donor:

**[Formula 21]** R1mR2nSi(OR3)(4-m-n)

wherein R1 and R2 may be the same as or different from each other and are each independently a linear or branched or cyclic alkyl group or aryl group having 1 to 12 carbon atoms, R3 is a linear or branched alkyl group having 1 to 6 carbon atoms, m and n are each 0 or 1, and m + n is 1 or 2.

Specific examples of the external electron donor include n-propyltrimethoxysilane, di-n-propyldimethoxysilane, isopropyltrimethoxysilane, diisopropyldimethoxysilane, n-butyltrimethoxysilane, di-n-butyldimethoxysilane, isobutyltrimethoxysilane, diisobutyldimethoxysilane, tert-butyltrimethoxysilane, di-tert-butyldimethoxysilane, n-pentyltrimethoxysilane, di-n-pentyldimethoxysilane, cyclopentyltrimethoxysilane, dicyclopentyldimethoxysilane, cyclopentylmethyldimethoxysilane, cyclopentylethyldimethoxysilane, cyclopentylpropyldimethoxysilane, cyclohexyltrimethoxysilane, dicyclohexyldimethoxysilane, cyclohexylmethyldimethoxysilane, cyclohexylethyldimethoxysilane, cyclohexylpropyldimethoxysilane, cycloheptyltrimethoxysilane, dicycloheptyldimethoxysilane, cycloheptylmethyldimethoxysilane, cycloheptylethyldimethoxysilane, cycloheptylpropyldimethoxysilane, phenyltrimethoxysilane, diphenyldimethoxysilane, phenylmethyldimethoxysilane, phenylethyldimethoxysilane, phenylpropyldimethoxysilane, n-propyltriethoxysilane, di-n-propyldiethoxysilane, isopropyltriethoxysilane, diisopropyldiethoxysilane, n-butyltriethoxysilane, di-n-butyldiethoxysilane, isobutyltriethoxysilane, diisobutyldiethoxysilane, tert-butyltriethoxysilane, di-tert-butyldiethoxysilane, n-pentyltriethoxysilane, di-n-pentyldiethoxysilane, cyclopentyltriethoxysilane, dicyclopentyldiethoxysilane, cyclopentylmethyldiethoxysilane, cyclopentylethyldiethoxysilane, cyclopentylpropyldiethoxysilane, cyclohexyltriethoxysilane, dicyclohexyldiethoxysilane, cyclohexylmethyldiethoxysilane, cyclohexylethyldiethoxysilane, cyclohexylpropyldiethoxysilane, cycloheptyltriethoxysilane, dicycloheptyldiethoxysilane, cycloheptylmethyldiethoxysilane, cycloheptylethyldiethoxysilane, cycloheptylpropyldiethoxysilane, phenyltriethoxysilane, diphenyldiethoxysilane, phenylmethyldiethoxysilane, phenylethyldiethoxysilane, and phenylpropyldiethoxysilane. Thereamong, one or a mixture of two or more may be used.

Although the ratio of the amount of the external electron donor to the amount of the solid catalyst used varies somewhat depending on the polymerization method, the molar ratio of silicon atoms in the external electron donor to titanium atoms in the catalyst component is preferably in the range of 0.1 to 500, more preferably 1 to 100. If the molar ratio of silicon atoms in the external electron donor to titanium atoms in the solid catalyst component is less than 0.1, the stereoregularity of the resulting polypropylene is significantly lowered, which is undesirable, and if the molar ratio is

more than 500, a problem arises in that the polymerization activity of the catalyst is significantly reduced.

In the method for producing a propylene-based polymer, the temperature of the polymerization reaction is preferably 20 to 120°C. If the temperature of the polymerization reaction is lower than 20°C, the reaction does not proceed sufficiently, which is undesirable, and if the temperature is higher than 120°C, the catalyst activity is severely lowered and the physical properties of the polymer are adversely affected, which is undesirable.

In particular, to produce a propylene block copolymer, two or more multi-step polymerization reactions are performed. Usually, the propylene block copolymer is obtained by polymerizing propylene in the presence of a polymerization catalyst in the first step and copolymerizing ethylene and propylene in the second step. It is also possible to produce a propylene copolymer or terpolymer by copolymerizing propylene with $\alpha$-olefin(s) other than propylene in the second step or subsequently to the second step. Examples of $\alpha$-olefins include ethylene, 1-butene, 4-methyl-1-pentene, vinylcyclohexane, 1-hexene, 1-octene, and the like.

In particular, through the method of producing a propylene polymer or copolymer using the solid catalyst presented in one embodiment of the present disclosure, it is possible to produce a polypropylene having excellent stereoregularity and excellent melt flowability while maintaining high catalyst activity, and to produce a propylene copolymer having a high comonomer content by the copolymerization of propylene with an alpha-olefin in a more stable manner without process troubles.

The present disclosure will be described in detail below with reference to Examples and Comparative Examples below, but the present disclosure is not limited by these Examples.

**Example 1**

**[Production of spherical carrier]**

A 5-L glass reactor equipped with a stirrer, an oil heater and a reflux condenser was sufficiently replaced with nitrogen, and then 4 g of N-bromosuccinimide, 15 g of metal magnesium (a powdery product having an average particle diameter of 100 $\mu$m) and 300 ml of anhydrous ethanol were introduced into the reactor and stirred at 200 rpm while maintaining the temperature of the reactor at 60°C. Since hydrogen was generated as the reaction started after about 10 minutes, the pressure of the reactor was maintained at atmospheric pressure by leaving the outlet of the reactor open so that the generated hydrogen was vented out.

After termination of hydrogen generation, the temperature of the reactor was maintained at 60°C for 1 hour. After 1 hour, 20 g of metal magnesium (a powdery product having an average particle diameter of 100 $\mu$m) and 400 ml of anhydrous ethanol together with 3 g of a reaction initiator were introduced into the reactor and allowed to react for 1 hour. Next, 60 g of metal magnesium (a powdery product having an average particle diameter of 100 um), 900 ml of anhydrous ethanol, and 4 g of a reaction initiator were introduced into the reactor and allowed to react for 30 minutes. Thereafter, 100 ml of ethanol was additionally introduced into the reactor, and then the mixture was aged for 3 hours until the reaction was completed. After completion of the aging, the resulting product was washed three times with 2,000 ml of n-hexane for each washing at 50°C.

The washed product was dried for 24 hours under flowing nitrogen to obtain 415 g (yield: 92.8%) of a diethoxy magnesium carrier as a white powdery solid product with good flowability ($\alpha$=0.6).

The average particle size of the dried product was 42.3 um as measured by an optical transmission method using a laser particle analyzer (Mastersizer X: manufactured by Malvern Instruments). In addition, the dried product had a particle size distribution index (P) of 0.43: P = (D90-D10)/D50, where D90 is the size of the particles corresponding to 90% of the cumulative weight, D50 is the size of the particles corresponding to 50% of the cumulative weight, and D10 is the particle size corresponding to 10% of the cumulative weight). In addition, the dried product had an apparent density of 0.26 g/cc, as measured by ASTM D1895. The pore volume of the diethoxy magnesium was 0.061 cc/g as measured by the BET method.

**[Production of solid catalyst component]**

**A** 1-L glass reactor equipped with a stirrer was sufficiently replaced with nitrogen, and 112 ml of toluene and 15 g of the diethoxy magnesium produced above were introduced into the reactor, and 20 ml of titanium tetrachloride diluted in 30 ml of toluene was introduced into the reactor over 1 hour at 10°C. Next, 5 g of 2-isopropyl-2-isopentyl-1,3-dimethoxypropane was slowly introduced into the reactor while increasing the temperature of the reactor to 100°C. After keeping at 100°C for 2 hours, the temperature was lowered to 90°C, stirring was stopped, the supernatant was removed, and the residue was washed once with 200 ml of toluene.

120 ml of toluene and 20 ml of titanium tetrachloride were added to the washed product, and the temperature was increased to and maintained at 100°C for 2 hours, and this process was repeated once. After completion of the aging process, the slurry mixture was washed twice with 200 ml of toluene for each washing, and washed 5 times with

200 ml of n-hexane for each washing at 40°C to obtain a pale yellow solid catalyst component. The titanium content in the solid catalyst component obtained after drying under flowing nitrogen for 18 hours was 2.3 wt%.

**[Propylene polymerization]**

10 mg of the solid catalyst, 10 mmol of triethyl aluminum as a cocatalyst component, and 1 mmol of dicyclopentyldimethoxysilane as an external electron donor were introduced into a 4-L high-pressure stainless steel reactor. Subsequently, 5,000 ml of hydrogen and 2.4 L of liquid propylene were sequentially introduced into the reactor, and then the temperature was increased to 70°C and polymerization was performed. When 2 hours elapsed after the initiation of the polymerization, the polypropylene inside the reactor was completely discharged by opening the valve while lowering the temperature of the reactor to room temperature.

The resulting polymer was analyzed and the results are shown in Table 1 below.

Here, the catalyst activity and the polymer stereoregularity were determined in the following manner:

(1) catalyst activity (kg-PP/g-cat) = amount of polymer produced (kg)÷amount of catalyst (g)
(2) stereoregularity (X.I.): amount (wt%) of insolubles crystallized and precipitated in mixed xylene solvent
(3) melt flow index (g/10 min): measured according to ASTM 1238 at 230°C and 2.16 kg load.

**Example 2**

**[Production of spherical carrier]**

A 10-L glass reactor equipped with a stirrer, an oil heater and a reflux condenser was sufficiently replaced with nitrogen, and then 4 g of N-bromosuccinimide, 20 g of metal magnesium (a powdery product having an average particle diameter of 120 μm) and 400 ml of anhydrous ethanol were introduced into the reactor and stirred at 250 rpm while maintaining the temperature of the reactor at 70°C. Since hydrogen was generated as the reaction started after about 10 minutes, the pressure of the reactor was maintained at atmospheric pressure by leaving the outlet of the reactor open so that the generated hydrogen was vented out.

After termination of hydrogen generation, the temperature of the reactor was maintained at 70°C for 1 hour. After 1 hour, 60 g of metal magnesium (a powdery product having an average particle diameter of 120 um) and 1,000 ml of anhydrous ethanol together with 5 g of a reaction initiator were introduced into the reactor and allowed to react for 1 hour. Next, 30 g of metal magnesium (a powdery product having an average particle diameter of 120 pm), 1,000 ml of anhydrous ethanol, and 1 g of a reaction initiator were introduced into the reactor and allowed to react for 1 hour. Thereafter, 100 g of metal magnesium (a powdery product having an average particle diameter of 120 um), 1,000 ml of anhydrous ethanol, and 7 g of a reaction initiator were introduced into the reactor and allowed to react for 30 minutes. Next, 400 ml of ethanol was additionally introduced into the reactor, and then the mixture was aged for 3 hours until the reaction was completed. After completion of the aging, the resulting product was washed three times with 3,000 ml of n-hexane for each washing at 50°C.

The washed product was dried for 24 hours under flowing nitrogen to obtain 941 g (yield: 95.5%) of a diethoxy magnesium carrier as a white powdery solid product with good flowability (α=1.1).

The carrier had an average particle size of 40.2 um, a particle size distribution index of 0.56, and an apparent density of 0.27 g/cc. In addition, the pore volume of the diethoxy magnesium was 0.066 cc/g as measured by the BET method.

**[Production of solid catalyst component]**

**A** solid catalyst was produced in the same manner as in Example 1. The titanium content in the solid catalyst component was 2.3 wt%. Next, propylene polymerization was performed in the same manner as in Example 1, and the results are shown in Table 1 below.

**Example 3**

**[Production of spherical carrier]**

**A** 10-L glass reactor equipped with a stirrer, an oil heater and a reflux condenser was sufficiently replaced with nitrogen, and then 3 g of N-bromosuccinimide, 40 g of metal magnesium (a powdery product having an average particle diameter of 130 μm) and 800 ml of anhydrous ethanol were introduced into the reactor and stirred at 250 rpm while maintaining the temperature of the reactor at 70°C. Since hydrogen was generated as the reaction started after about

10 minutes, the pressure of the reactor was maintained at atmospheric pressure by leaving the outlet of the reactor open so that the generated hydrogen was vented out.

After termination of hydrogen generation, the temperature of the reactor was maintained at 70°C for 1 hour. After 1 hour, 60 g of metal magnesium (a powdery product having an average particle diameter of 130 μm) and 1,200 ml of anhydrous ethanol together with 4 g of a reaction initiator were introduced into the reactor and allowed to react for 1 hour. Next, 85 g of metal magnesium (a powdery product having an average particle diameter of 130 μm), 1,300 ml of anhydrous ethanol, and 6 g of a reaction initiator were introduced into the reactor and allowed to react for 30 minutes. Next, 400 ml of ethanol was additionally introduced into the reactor, and then the mixture was aged for 3 hours until the reaction was completed. After completion of the aging, the resulting product was washed three times with 3,000 ml of n-hexane for each washing at 50°C.

The washed product was dried for 24 hours under flowing nitrogen to obtain 796 g (yield: 91.4%) of a diethoxy magnesium carrier as a white powdery solid product with good flowability ($\alpha$ = 1.2).

The carrier had an average particle size of 39.2 um, a particle size distribution index of 0.61, and an apparent density of 0.28 g/cc. In addition, the pore volume of the diethoxy magnesium was 0.068 cc/g as measured by the BET method.

**[Production of solid catalyst component]**

**A** solid catalyst was produced in the same manner as in Example 1. The titanium content in the solid catalyst component was 2.2 wt%. Next, propylene polymerization was performed in the same manner as in Example 1, and the results are shown in Table 1 below.

**Example 4**

**[Production of spherical carrier]**

A 5-L glass reactor equipped with a stirrer, an oil heater and a reflux condenser was sufficiently replaced with nitrogen, and then 2 g of N-bromosuccinimide, 10 g of metal magnesium (a powdery product having an average particle diameter of 110 pm), and 250 ml of anhydrous ethanol were introduced into the reactor and stirred at 200 rpm while maintaining the temperature of the reactor at 65°C. Since hydrogen was generated as the reaction started after about 10 minutes, the pressure of the reactor was maintained at atmospheric pressure by leaving the outlet of the reactor open so that the generated hydrogen was vented out.

After termination of hydrogen generation, the temperature of the reactor was maintained at 65°C for 1 hour. After 1 hour, 20 g of metal magnesium (a powdery product having an average particle diameter of 110 μm) and 300 ml of anhydrous ethanol together with 2 g of a reaction initiator were introduced into the reactor and allowed to react for 1 hour. Next, 40 g of metal magnesium (a powdery product having an average particle diameter of 110 pm), 600 ml of anhydrous ethanol, and 2 g of a reaction initiator were introduced into the reactor and allowed to react for 30 minutes. Next, 100 ml of ethanol was additionally introduced into the reactor, and then the mixture was aged for 3 hours until the reaction was completed. After completion of the aging, the resulting product was washed three times with 3,000 ml of n-hexane for each washing at 50°C.

The washed product was dried for 24 hours under flowing nitrogen to obtain 312 g (yield: 94.7%) of a diethoxy magnesium carrier as a white powdery solid product with good flowability ($\alpha$ = 0.8).

The carrier had an average particle size of 42.8 um, a particle size distribution index of 0.47, and an apparent density of 0.26 g/cc. In addition, the pore volume of the diethoxy magnesium was 0.070 cc/g as measured by the BET method.

**[Production of solid catalyst component]**

**A** solid catalyst was produced in the same manner as in Example 1. The titanium content in the solid catalyst component was 2.3 wt%. Next, propylene polymerization was performed in the same manner as in Example 1, and the results are shown in Table 1 below.

**Comparative Example 1**

**[Production of spherical carrier]**

A 5-L glass reactor equipped with a stirrer, an oil heater and a reflux condenser was sufficiently replaced with nitrogen, and then 2 g of N-bromosuccinimide, 10 g of metal magnesium (a powdery product having an average particle

diameter of 120 μm), and 150 ml of anhydrous ethanol were introduced into the reactor and stirred at 250 rpm while maintaining the temperature of the reactor at 75°C. Since hydrogen was generated as the reaction started after about 10 minutes, the pressure of the reactor was maintained at atmospheric pressure by leaving the outlet of the reactor open so that the generated hydrogen was vented out.

After termination of hydrogen generation, the temperature of the reactor was maintained at 75°C for 1 hour. After 1 hour, 30 g of metal magnesium (a powdery product having an average particle diameter of 120 μm) and 400 ml of anhydrous ethanol together with 4 g of a reaction initiator were introduced into the reactor and allowed to react for 1 hour. Next, 20 g of metal magnesium (a powdery product having an average particle diameter of 120 pm), 200 ml of anhydrous ethanol, and 2 g of a reaction initiator were introduced into the reactor, and then the mixture was aged for 3 hours until the reaction was completed. After completion of the aging, the resulting product was washed three times with 3,000 ml of n-hexane for each washing at 50°C.

The washed product was dried for 24 hours under flowing nitrogen to obtain 256 g (yield: 90.6%) of a diethoxy magnesium carrier as a white powdery solid product with good flowability ($\alpha$ = 2.0).

The carrier had an average particle size of 38.7 um, a particle size distribution index of 0.76, and an apparent density of 0.33 g/cc. In addition, the pore volume of the diethoxy magnesium was 0.0085 cc/g as measured by the BET method.

**[Production of solid catalyst component]**

**A** solid catalyst was produced in the same manner as in Example 1. The titanium content in the solid catalyst component was 2.3 wt%. Next, propylene polymerization was performed in the same manner as in Example 1, and the results are shown in Table 1 below.

**Comparative Example 2**

**[Production of spherical carrier]**

A 5-L glass reactor equipped with a stirrer, an oil heater and a reflux condenser was sufficiently replaced with nitrogen, and then 7 g of N-bromosuccinimide, 60 g of metal magnesium (a powdery product having an average particle diameter of 120 μm), and 700 ml of anhydrous ethanol were introduced into the reactor and stirred at 300 rpm while maintaining the temperature of the reactor at 70°C under ethanol reflux. Since hydrogen was generated as the reaction started after about 5 minutes, the pressure of the reactor was maintained at atmospheric pressure by leaving the outlet of the reactor open so that the generated hydrogen was vented out.

After termination of hydrogen generation, the mixture was aged by maintaining the reactor temperature and the stirring speed in a reflux state for 2 hours. After completion of the aging, the resulting product was washed three times with 2,000 ml of n-hexane for each washing at 50°C.

The washed product was dried for 24 hours under flowing nitrogen to obtain 328 g (yield: 92.8%) of a diethoxy magnesium carrier as a white powdery solid product with good flowability.

As a result of performing measurements in the same manner as in Example 1, the dried carrier suspended in n-hexane had an average particle size of 20.6 um, a particle size distribution index of 1.37, and an apparent density of 0.35 g/cc. In addition, the pore volume of the diethoxy magnesium was 0.0078 cc/g as measured by the BET method.

**[Production of solid catalyst component]**

**A** solid catalyst was produced in the same manner as in Example 1, except that 4.7 g of diisobutyl phthalate was used as an internal donor. The titanium content in the solid catalyst component was 2.2 wt%. Next, propylene polymerization was performed in the same manner as in Example 1, and the results are shown in Table 1 below.

**[Table 1]**

| | Catalyst activity | Stereoregularity (X.I.) | Melt index (MI) |
|---|---|---|---|
| | (g-PP/g cat 2h) | (wt%) | (g/10min) |
| Example 1 | 63,000 | 98.9 | 89.8 |
| Example 2 | 62,000 | 98.9 | 90.1 |
| Example 3 | 64,000 | 98.9 | 86.9 |
| Example 4 | 64,000 | 98.8 | 87.7 |

(continued)

| | Catalyst activity | Stereoregularity (X.I.) | Melt index (MI) |
|---|---|---|---|
| Comparative Example 1 | 60,000 | 98.7 | 81.3 |
| Comparative Example 2 | 55,000 | 97.9 | 16.3 |

**[Propylene-ethylene copolymerization]**

A 2.0-L stainless reactor equipped with a stirrer was charged with nitrogen, 5 mg of each of the above solid catalysts was placed in the reactor, and 3 mmol of triethyl aluminum and 0.3 mmol of cyclohexylmethyldimethoxysilane were introduced into the reactor. Next, 1.2 L of liquefied propylene and 1,000 ml of hydrogen were introduced into the reactor, and then pre-polymerization was performed at 20°C for 5 minutes. Thereafter, polymerization was performed while introducing 200, 300, or 400 sccm of ethylene through MFC at 70°C for 30 minutes, thus obtaining propylene-based copolymers. The results are shown in Table 2 below.

The ethylene-propylene rubber content, the ethylene content in the copolymer, and the melting temperature, shown in Table 2 below, were determined in the following manner:

(1) Ethylene-propylene rubber content (X/S, wt%): the amount (wt%) of components precipitated after extracting the copolymer with xylene and removing the xylene
(2) the ethylene content in the copolymer (B-C2, B-C4): the ethylene content measured in a copolymer sample by infrared spectroscopy (FT-IR) (calculated based on a calibration curve prepared using a standard sample)
(3) melting temperature (Tm):
measured by differential scanning calorimetry while cooling a sample to 40°C at a rate of 10°C/min after maintaining the sample at 200°C for 7 minutes.

[Table 2]

| Entry | | Propylene-based copolymerization | | | |
|---|---|---|---|---|---|
| | Catalyst | Amount of C2 introduced (sccm) | B-C2 (wt%) | Tm (°C) | X/S (wt%) |
| 1 | Example 1 | 200 | 2.05 | 147.2 | 4.8 |
| 2 | Example 1 | 300 | 3.02 | 141.4 | 6.2 |
| 3 | Example 1 | 400 | 4.28 | 137.1 | 7.7 |
| 4 | Comparative Example 1 | 200 | 1.73 | 148.8 | 3.3 |
| 5 | Comparative Example 1 | 300 | 2.72 | 146.0 | 5.8 |
| 6 | Comparative Example 1 | 400 | 3.42 | 140.9 | 8.5 |
| 7 | Comparative Example 2 | 200 | 0.83 | 156.8 | 2.3 |
| 8 | Comparative Example 2 | 300 | 1.62 | 151.7 | 3.7 |
| 9 | Comparative Example 2 | 400 | 2.53 | 148.5 | 4.2 |

As shown in Table 2 above, it can be confirmed that, through the method of producing a catalyst using a diether compound according to one embodiment of the present disclosure as described above, it is possible to obtain a propylene-based copolymer having a narrow molecular weight distribution using a catalyst having a high apparent density and activity while having high hydrogen reactivity compared to conventional catalysts.

**[Propylene-ethylene-1-butene terpolymerization]**

A 2.0-L stainless reactor equipped with a stirrer was charged with nitrogen, 5 mg of each of the above solid catalysts was placed in the reactor, and 3 mmol of triethyl aluminum and 0.3 mmol of cyclohexylmethyldimethoxysilane were introduced into the reactor. Next, 1.2 L of liquefied propylene and 1,000 ml of hydrogen were introduced into the reactor, and then pre-polymerization was performed at 20°C for 5 minutes. Thereafter, a predetermined amount of 1-butene was introduced into the reactor, and then polymerization was performed while introducing 200, 300, or 400 sccm

of ethylene through MFC at 70°C for 30 minutes, thus obtaining propylene-based terpolymers. The results are shown in Table 3 below.

[Table 3]

| Entry | | Propylene-ethylene-1-butene terpolymerization | | | | | |
|---|---|---|---|---|---|---|---|
| | Catalyst | Amount of C2 introduc ed (sccm) | Amount of C4 introduc ed (cc) | B-C2 (wt%) | B-C4 (wt%) | Tm (°C) | X/S (wt%) |
| 1 | Example 1 | 350 | 100 | 3.5 | 4.34 | 127.8 | 11.2 |
| 6 | Comparative Example 1 | 350 | 100 | 3.1 | 3.9 | 130.2 | 12.8 |
| 7 | Comparative Example 2 | 350 | 100 | 1.9 | 2.8 | 140.7 | 9.3 |

As can be seen from the results in Table 3 above, according to an embodiment of the present disclosure, it is possible to produce a propylene-based copolymer having a high comonomer content while dramatically reducing the agglomeration of polymer particles by using the Ziegler-Natta-type catalyst composed of the carrier produced by the reaction of dialkoxy magnesium with the metal halide, the titanium halide, the organic electron donor, etc.

It is obvious that, when the process for producing a spherical carrier and the process for producing a solid catalyst component, which are illustratively described in Examples 1 to 4 above, the above-described process for propylene polymerization, and the above-described process for propylene-ethylene copolymerization, are applied in the same manner, the solid catalyst for propylene polymerization and the propylene-based polymer, which are mentioned in the Examples above, may be produced even when the starting material is changed.

For example, although ethylene was described as an example of an olefin in Example 4, it is possible to synthesize a propylene-1-butene copolymer using another olefin such as 1-butene instead of ethylene.

As described above, one embodiment of the present disclosure provides a method for producing a solid catalyst for producing polypropylene, in which the solid catalyst is composed of a carrier (produced by reacting dialkoxy magnesium, produced by controlling the amounts of addition of a metal magnesium, an alcohol, and a reaction initiator and the number of times these components are added, reaction temperature, etc., with a metal halide), a titanium halide, an organic electron donor, and the like, and a method of producing a propylene-based polymer using the solid catalyst.

In particular, the solid catalyst produced using the dialkoxy magnesium carrier, which is used in one embodiment of the present disclosure, may be applied to various types of polypropylene polymerization processes such as slurry polymerization, bulk polymerization, or gas phase polymerization, has high activity and excellent melt flowability, and makes it possible to produce a propylene copolymer having a high comonomer content by the copolymerization of propylene with an alpha-olefin. In addition, in the propylene copolymer produced through one embodiment of the present disclosure, no agglomeration between particles was found even at a high comonomer content, suggesting that, when the present disclosure is applied to a commercial process, it is possible to produce a propylene copolymer product having a higher comonomer content in a more stable manner without process troubles.

The above description provides an example of the technical idea of the present disclosure for illustrative purposes only, and those skilled in the art to which the present disclosure belongs will appreciate that various modifications and variations are possible without departing from the technical idea and essential characteristics of the present disclosure. In addition, the present embodiments are intended to limit the technical idea of the present disclosure but intended to explain the technical idea, and thus the scope of the technical idea of the present disclosure is not limited by these embodiments. Accordingly, the scope of protection of the present disclosure should be defined by the appended claims, and all technical ideas within the scope equivalent thereto should be interpreted as being included in the scope of the present disclosure.

## Claims

1. A method for producing a solid catalyst for producing polypropylene, the method comprising steps of:

    (1) reacting a dialkoxy magnesium with a metal halide compound in the presence of an organic solvent;
    (2) reacting the reaction product of step (1) with at least one internal electron donor while increasing the reaction temperature; and
    (3) reacting the reaction product of step (2) with a titanium halide,

wherein the dialkoxy magnesium in step (1) is produced through a reaction step of reacting metal magnesium, an alcohol, and a reaction initiator,
wherein the metal magnesium is introduced in n divided portions (where n is an integer greater than 2 and represents the total number of the divided portions), and the amount of the metal magnesium introduced is controlled to satisfy the following Equation 1:

[Equation 1]

$$0.1 \leq N/W\ (\alpha) \leq 1.2$$

wherein N is a positive integer and represents the sum of the amounts of the metallic magnesium introduced from the beginning to (n-1)$^{th}$, and W is a positive integer and represents the amount (number of moles) of the metal magnesium introduced at n$^{th}$ which is the last introduction stage.

2. The method of claim 1, wherein n in the reaction step is an integer of 3 or more, and the reaction initiator is introduced into a reaction system at the beginning of the reaction.

3. The method of claim 1, wherein the metal magnesium and the alcohol are used for production of the dialkoxy magnesium at a ratio of 1:5 to 1:100 as metal magnesium weight: alcohol volume, and the reaction between the metal magnesium and the alcohol is performed at a temperature of 25 to 110°C.

4. The method of claim 1, wherein the solid catalyst comprises 5 to 40 wt% of the metal magnesium, 0.5 to 10 wt% of the titanium, 50 to 85 wt% of the halogen, and 0.01 to 20 wt% of the internal electron donor.

5. The method of claim 1, wherein the reaction initiator is at least one of a nitrogen halide compound, a halogen compound, or a magnesium halide.

6. The method of claim 5, wherein the nitrogen halide compound is represented by any one selected from the group consisting of the following Formulas: 1 to 4:

[Formula 1]

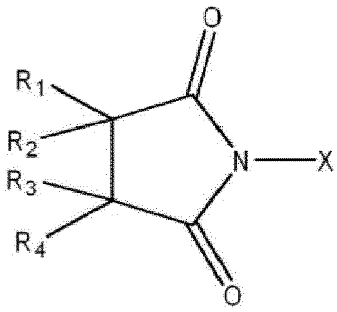

wherein X is a halogen, and $R_1$, $R_2$, $R_3$ and $R_4$ are each independently hydrogen, $C_1$-$C_{12}$ alkyl, or $C_6$-$C_{20}$ aryl;

[Formula 2]

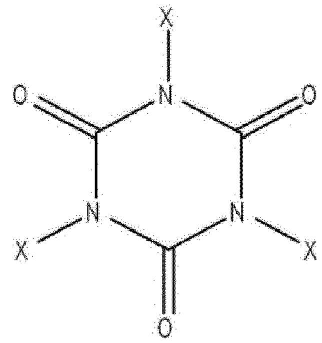

wherein each X is independently a halogen,

[Formula 3]

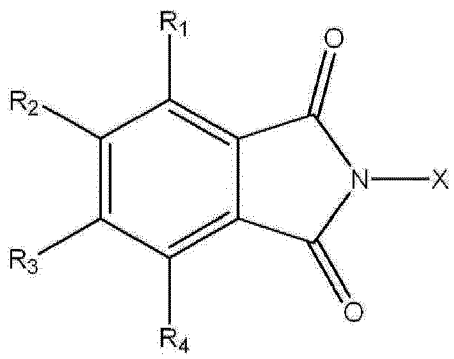

wherein X is a halogen, and $R_1$, $R_2$, $R_3$ and $R_4$ are each independently hydrogen, $C_1$-$C_{12}$ alkyl, or $C_6$-$C_{20}$ aryl;

[Formula 4]

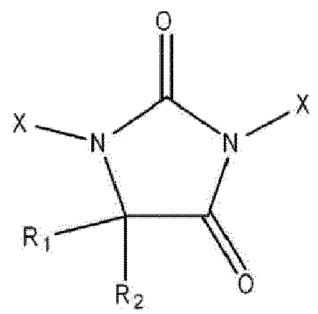

wherein each X is independently a halogen, and $R_1$ and $R_2$ are each independently hydrogen, $C_1$-$C_{12}$ alkyl, or $C_6$-$C_{20}$ aryl.

**7.** The method of claim 5, wherein the halogen compound is at least one of $Br_2$ or $I_2$, and the magnesium halide is at least one of magnesium chloride ($MgCl_2$), magnesium bromide ($MgBr_2$), or magnesium iodide ($MgI_2$).

**8.** The method of claim 2, wherein the internal electron donor comprises a diester selected from among aromatic diesters and cyclic diesters, or a 1,3-diether compound.

**9.** The method of claim 2, wherein the solid catalyst comprises 0.01 to 20 wt% of the internal electron donor.

**10.** A solid catalyst produced according to the method of any one of claims 1 to 9.

**11.** A method for producing a propylene-based polymer, the method comprising polymerizing propylene to produce a propylene polymer or copolymerizing or terpolymerizing propylene with other alpha-olefin(s) to produce a propylene copolymer or terpolymer, in the presence of a solid catalyst, produced by the method of any one of claims 1 to 9, an alkyl aluminum compound as a cocatalyst, and R1mR2nSi(OR3) (4-m-n) as an external electron donor, R1 and R2 are the same as or different from each other and are each independently a linear or branched or cyclic alkyl group or aryl group having 1 to 12 carbon atoms, R3 is a linear or branched alkyl group having 1 to 6 carbon atoms, m and n are each 0 or 1, and m + n is 1 or 2.

**12.** The method of claim 11, wherein the alkyl aluminum compound is represented by $AlR_3$, wherein R is an alkyl group having 1 to 6 carbon atoms.

*FIG. 1*

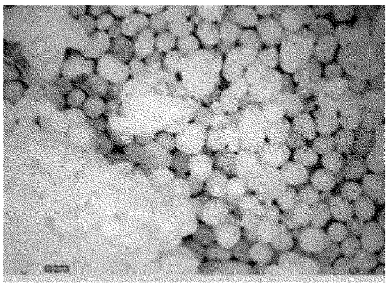

FIG.2

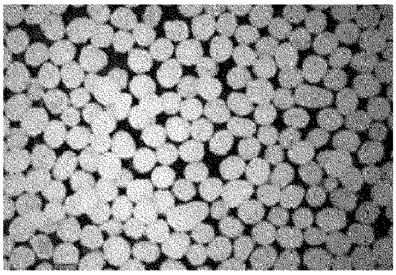

Europäisches Patentamt
European Patent Office
Office européen des brevets

# EUROPEAN SEARCH REPORT

Application Number
EP 23 20 4409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 301 664 A2 (SAMSUNG TOTAL PETROCHEMICALS [KR]) 30 March 2011 (2011-03-30) * pages 6-7; example 1 * * pages 9-10; example 5 * * page 10, paragraph 49 * ----- | 1-12 | INV. C08F10/06 C08F4/654 |
| X | EP 3 670 546 A1 (HANWHA TOTAL PETROCHEMICAL CO LTD [KR]) 24 June 2020 (2020-06-24) * page 10, paragraphs 62, 65 * * page 11; example 2 * ----- | 1-12 | |
| X | KR 2012 0006719 A (SAMSUNG TOTAL PETROCHEMICALS [KR]) 19 January 2012 (2012-01-19) * page 12, paragraph 62-64 * * page 14; example 5 * ----- | 1-12 | |
| X | WO 2022/011812 A1 (CHINA ENERGY GROUP NINGXIA COAL IND CO LTD [CN] ET AL.) 20 January 2022 (2022-01-20) * pages 12-13; example 1 * * page 15, test example 1 * ----- | 1-12 | TECHNICAL FIELDS SEARCHED (IPC) C08F |
| X | KR 2013 0009435 A (SAMSUNG TOTAL PETROCHEMICALS [KR]) 23 January 2013 (2013-01-23) * pages 9-10; example 1 * ----- | 1-12 | |

The present search report has been drawn up for all claims

1

| Place of search | Date of completion of the search | Examiner |
|---|---|---|
| Munich | 13 February 2024 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 20 4409

This annex lists the patent family members relating to the patent documents cited in the above-mentioned European search report. The members are as contained in the European Patent Office EDP file on
The European Patent Office is in no way liable for these particulars which are merely given for the purpose of information.

13-02-2024

| Patent document cited in search report | Publication date | Patent family member(s) | Publication date |
|---|---|---|---|
| EP 2301664 A2 | 30-03-2011 | CN 102089078 A | 08-06-2011 |
| | | EP 2301664 A2 | 30-03-2011 |
| | | JP 2011513576 A | 28-04-2011 |
| | | KR 20100007076 A | 22-01-2010 |
| | | US 2011166394 A1 | 07-07-2011 |
| | | WO 2010005164 A2 | 14-01-2010 |
| EP 3670546 A1 | 24-06-2020 | CN 111349185 A | 30-06-2020 |
| | | EP 3670546 A1 | 24-06-2020 |
| | | KR 20200077232 A | 30-06-2020 |
| | | US 2020199266 A1 | 25-06-2020 |
| KR 20120006719 A | 19-01-2012 | NONE | |
| WO 2022011812 A1 | 20-01-2022 | CN 111875723 A | 03-11-2020 |
| | | WO 2022011812 A1 | 20-01-2022 |
| KR 20130009435 A | 23-01-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4562173 A
- US 4981930 A
- KR 72844
- KR 491387
- KR 0572616
- US 20110040051 A